(19) Europäisches Patentamt

European Patent Office

Office européen des brevets

(11) EP 0 734 986 B1

(12) **EUROPÄISCHE PATENTSCHRIFT**

(45) Veröffentlichungstag und Bekanntmachung des Hinweises auf die Patenterteilung:
**16.08.2001   Patentblatt 2001/33**

(51) Int Cl.⁷: **B65H 23/032**, G01B 7/00, G01D 5/241

(21) Anmeldenummer: **96104765.1**

(22) Anmeldetag: **26.03.1996**

(54) **Vorrichtung zum berührungslosen Erfassen der Lage eines laufenden Materialbandes**

Device for contactless sensing of the position of a running web

Dispositif pour détecter sans contact la position d'une bande de matériau en mouvement

(84) Benannte Vertragsstaaten:
**BE DE ES FR GB IT LU NL SE**

(30) Priorität: **30.03.1995   DE 19511646**

(43) Veröffentlichungstag der Anmeldung:
**02.10.1996   Patentblatt 1996/40**

(73) Patentinhaber: **FIFE GmbH**
**D-65779 Kelkheim (DE)**

(72) Erfinder: **Kespohl, Peter**
**65779 Kelkheim (DE)**

(74) Vertreter: **Nix, Frank Arnold, Dr.**
**Kröckelbergstrasse 15**
**65193 Wiesbaden (DE)**

(56) Entgegenhaltungen:
EP-A- 0 441 479          DE-A- 2 429 109
DE-A- 2 744 785          DE-A- 4 009 697
DE-C- 3 518 187          GB-A- 1 183 974
GB-A- 2 295 016          US-A- 4 584 885

**Beschreibung**

Die vorliegende Erfindung bezieht sich auf eine Vorrichtung zum berührungslosen Erfassen der Lage eines laufenden, aus leitfähigem Material bestehenden und auf NullPotential liegenden Bandes mit einer auf der einen Seite des Materialbandes parallel zu diesem angeordneten und den Bereich der Materialbandränder übergreifenden Breitenerfassungelektrode sowie einem Paar von zwei Randelektroden, die auf der anderen Seite des Materialbandes im Bereich von dessen Rändern gegenüber der Breitenerfassungselektrode angeordnet sind, wobei eine der beiden Elektrodenanordnungen eine an einen Oszillator angeschlossene Sendeelektrodenanordnung und die andere eine kapazitiv derart an die Sendeelektrodenanordnung gekoppelte Detektorelektrodenanordnung bildet, daß zwei Koppelstrecken im Bereich der beiden Ränder des Materialbandes gebildet sind und eine seitliche Versetzung des Bandes gegensinnig auf die beiden Kopplungen wirkt, und wobei an die Detektorelektrodenanordnung eine Auswerteschaltung zur Gewinnung eines Lageabweichungssignals zur Regelung des Bandlaufs angeschlossen ist. Eine solche Vorrichtung ist aus DE-PS 40 09 697 bekannt.

Bei dieser bekannten Vorrichtung ist das erste Glied der Auswerteschaltung zur Gewinnung des Lageabweichungssignals eine Spannungsmeßanordnung mit einem bestimmten, relativ hochohmigen Eingangswiderstand, an dem die kapazitiven Verschiebeströme einen Spannungsabfall erzeugen, der von einem Eingangsverstärker verstärkt und ggfs. einem Demodulator zur Weiterverarbeitung zugeführt wird.

Zur Abschirmung äußerer Störeinflüsse auf die Detektorelektrodenanordnung sind diese in an sich aus DE-OS 27 44 785 bekannter Weise mit Abschirmelektroden versehen, deren Potential zwangsweise dem Potential der Detektorelektrode(n) nachgeführt wird. Damit ist diese bekannte Vorrichtung zum Erfassen der Lage eines sich bewegenden Materialbandes weitgehend unempfindlich gegenüber externen Störeinflüssen und besitzt dabei eine höhere Empfindlichkeit gegenüber Bandlageänderungen, als die in DE-AS 15 74 292 beschriebenen Vorrichtungen.

Jedoch haben auch die vorstehend vorausgesetzten Vorrichtungen noch den Nachteil, daß die Empfindlichkeit für Bandlageänderungen von der Breite des Materialbandes abhängig ist. Für einige Anwendungen ist ein derartiges Verhalten der Meßvorrichtung unbrauchbar, da es mit einer solchen Vorrichtung nicht mehr möglich ist, die Regeleinrichtung optimal einzustellen, ohne die Breite des Materialbandes zu kennen.

Die Abhängigkeit der Meßempfindlichkeit von der Materialbandbreite wird von der kapazitiven Belastung der Detektorelektrode(n) durch das Materialband selbst verursacht. Diese entsteht durch die von der Detektorelektrode(n) und dem Materialband gebildete Störkapazität(en), welche entsprechend der Breite des Materialbandes variiert. Bei Betrachtung der Ausbildung, bei der die Breitenerfassungselektrode die Detektorelektrode ist, kommt dieser Störeinfluß dann zum Tragen, wenn bei nicht mittiger Lage des Materialbandes an ihr ein Wechselspannungspotential verschieden von Null auftritt. Diese Wechselspannung an der Detektorelektrode wird durch die Störkapazität zwischen dem Materialband und der Detektorelektrode belastet, die einen parasitären Nebenschluß zum Meßwiderstand bildet. Der über diese Kapazität fließende kapazitive Verschiebestrom reduziert die Spannung an der Detektorelektrode, weil zwischen den Sendeelektroden, der Detektorelektrode und dem Materialband, ein kapazitiver Spannungsteiler gebildet wird. Je größer die Störkapazität zwischen der Detektorelektrode und dem Materialband ist, um so kleiner ist die Spannung an der Detektorelektrode.

Dieser Sachverhalt führt dazu, daß der bekannte kapazitive Bandmittensensor bei Materialbändern großer Breite weniger empfindlich ist, als bei Materialbändern geringerer Breite. Das heißt, daß eine seitliche Verschiebung des Materialbandes bei schmalen Bändern eine größere Spannungsänderung an der Detektorelektrode erzeugt, als die gleiche seitliche Verschiebung bei breiten Materialbändern.

Dieser Effekt führt bei der Bandlageregelung dazu, daß die Regelung auf seitliche Abweichungen bei breiten Materialbändern langsamer und träger reagiert, als es bei schmalen Materialbändern der Fall ist. Dieselben negativen Folgen sind zu beobachten, wenn sich das Materialband der Detektorelektrode nähert. Auch dies führt zu einer Erhöhung der Störkapazität und damit zu einer Spannungsreduzierung an der Detektorelektrode sowie zu einer Empfindlichkeitsreduzierung des Sensors.

Aufgabe der Erfindung ist die Verbesserung der Vorrichtung zum Erfassen der Lage eines laufenden Materialbandes der vorausgesetzten Bauart in der Weise, daß unter Aufrechterhaltung der kompakten Bauart, der weitgehenden Unempfindlichkeit gegenüber externen Störeinflüssen und der guten Empfindlichkeit gegenüber Bandlageänderungen auch keine von der Breite des Materialbandes abhängigen Empfindlichkeitsänderungen auftreten.

Ausgehend von der eingangs genannten Ausbildung einer Vorrichtung zur Lageerfassung eines laufenden Materialbandes wird diese Aufgabe erfindungsgemäß dadurch gelöst, daß die Eingangsimpedanz der Auswerteschaltung so klein ist, daß das Potential der Detektorelektrodenanordnung zwangsweise bei Null gehalten ist und das Meßsignal aus dem über die Auswerteschaltung abfließenden Strom gewonnen wird. Sofern ein nichtlineares System vorliegt, muß die Eingangsimpedanz der Auswerteschaltung wenigstens für den gegebenen Signalverlauf sehr klein sein.

Wenn das Potential der Detektorelektrode zwangsweise immer bei Null oder nahe bei Null gehalten wird, auch wenn das Materialband nicht mittig durch die Lageerfassungsvorrichtung läuft, hat die Störkapazität zwischen Materialband und Detektorelektrode keinen Einfluß auf das Potential an der Detektorelektrode, da das Materialband und die Detektorelektrode auf dem gleichen Potential liegen. Somit fließt kein kapazitiver Verschiebestrom zwischen Materialband und Detektorelektrode, wodurch erreicht wird, daß die Empfindlichkeit des Bandmittensensors keinem störenden Einfluß der Breite des Materialbandes unterliegt.

Auf diese Art und Weise wird auch eine Unempfindlichkeit des Sensors gegen eine Annäherung des Materialbandes an die Detektorelektrode oder Verdrehungen des Materialbandes aus der horizontalen Lage erzielt.

Zweckmäßige Weiterbildungen der Erfindung sind in den Unteransprüchen angegeben.

Die Erfindung wird nachfolgend durch die Beschreibung von Ausführungsbeispielen weiter erläutert. Es zeigt

Fig. 1     das Schema einer Vorrichtung zur Lageerfassung einer laufenden Materialbahn mit einer die gesamte Breite erfassenden Detektorelektrode;

Fig. 2     eine zweite Ausbildung mit einer die gesamte Breite erfassenden Sendeelektrode;

Fig. 3     die erste Ausbildung mit einer zusätzlichen Anordnung zur Überwachung der Isolierwirkung der Aufhängung der Elektroden.

In den Abbildungen ist die Anordnung der Elektroden zum laufenden Materialband 2 als schematische Querschnittsdarstellung anzusehen, d.h. das Materialband 2 läuft in die Zeichenebene hinein bzw. aus ihr heraus und ist auf einer gewissen Erstreckung umgeben von den verschiedenen Elektroden.

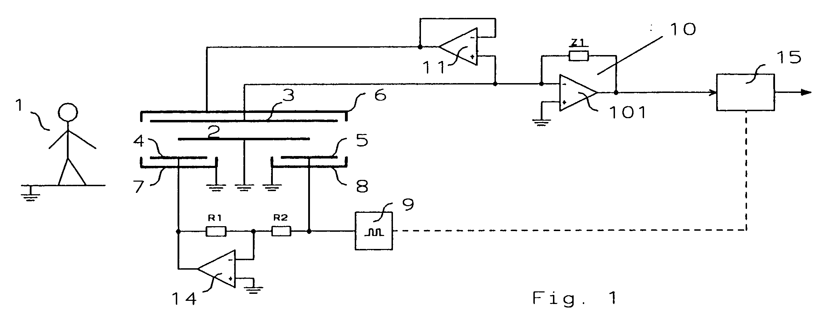

Bei Betrachtung der ersten Ausbildung gemäß Fig. 1 sind unterhalb des Materialbandes 2 im Bereich von dessen Rändern Sendeelektroden 4, 5 angeordnet, die von Abschirmelektroden 7, 8 abgeschirmt sind. Ein Oszillator beaufschlagt unmittelbar die Sendeelektrode 5 und über einen Umkehrverstärker 14 die Sendeelektrode 4. Der Umkehrverstärker 14 ist ein Operationsverstärker, der in Verbindung mit den Widerständen R1, R2 eine Phasendrehung um 180° bewirkt.

Oberhalb des Materialbandes 2 erstreckt sich über dessen gesamte Breite und die anschließenden Randbereiche eine Detektorelektrode 3, an die ein Strom-Spannungswandler 10 aus einem Operationsverstärker 101 und einem dessen Ausgang auf den invertierenden Eingang rückkoppelnder Scheinwiderstand $\underline{Z1}$ angeschlossen ist. Der Ausgang des Strom-Spannungswandlers 10 wirkt auf einen Demodulator 15.

Der vom Materialband 2 abgewandte Bereich der Detektorelektrode 3 ist umfaßt von einer Abschirmelektrode 6, die angeschlossen ist an den Ausgang eines Spannungsfolgers 11, dessen Eingang mit der Detektorelektrode 3 verbunden ist.

Im Betrieb speist der Oszillator 9 die Sendeelektrode 5 und der Umkehrverstärker 14 die Sendeelektrode 4. Der Umkehrverstärker 14 bewirkt, daß an der Sendeelektrode 4 die gleiche Signalamplitude anliegt, wie an der Sendeelektrode 5. Nur die Phasenlage des Signals an der Sendeelektrode 4 ist um 180° gegenüber dem Signal an der Sendeelektrode 5 verschoben. Unter diesen Bedingungen wird an der Detektorelektrode 3 kein Signal vorhanden sein, wenn das Materialband 2 mittig durch die Vorrichtung läuft, da von jeder der beiden Sendeelektroden ein kapazitiver Verschiebestrom zu der Detektorelektrode fließt und sich die Wirkung der beiden Ströme an der Detektorelektrode aufhebt.

Wenn nun das Materialband aus seiner mittigen Lage auswandert, wird die kapazitive Kopplung am einen Rand stärker und am anderen Rand schwächer. Der kapazitive Verschiebestrom der einen Sendeelektrode gegenüber dem der anderen Sendeelektrode wird überwiegen, sodaß ein Differenzstrom entsteht. Dieser Differenzstrom gelangt nun zu dem Minuseingang des Operationsverstärkers 101 welcher über $\underline{Z1}$ gegengekoppelt ist. Der Operationsverstärker 101 ist so ausgeführt, daß er eine sehr hohe Eingangsimpedanz aufweist. Unter dieser Bedingung muß der Differenzstrom des Bandmittensensors zum größten Teil durch den Gegenkopplungswiderstand $\underline{Z1}$ fließen und der Spannungsabfall an $\underline{Z1}$ bestimmt die Ausgangsspannung $U_a$ des Verstärkers.

Aus der Phasenlage der Ausgangsspannung $U_a$ ergibt sich, welche Kopplung stärker und welche schwächer geworden ist und damit die Richtung des Auswanderns des Materialbandes. Ein Signalpfad für die Phasenlage vom Oszillator 9 zum Demodulator 15 ist gestrichelt angedeutet.

Die Eingangsspannung $U_e$ des Operationsverstärkers 101 ergibt sich aus

$$U_e = -U_a / V_o.$$

Dabei bezeichnet $U_e$ die Spannung am Eingang, $U_a$ die Spannung am Ausgang und $v_o$ die Leerlaufverstärkung des Operationsverstärkers 101. Wenn der Verstärker so ausgeführt wird, daß $v_o$ sehr groß ist, dann ist die Spannung am Eingang des Verstärkers und damit auch an der Detektorelektrode 3 sehr klein und der Strom-Spannungswandler 10 weist insgesamt eine sehr kleine Eingangsimpedanz auf. Die am Ausgang des Strom-Spannungswandlers 10 auftretende Spannung $U_a$ entsteht bei dieser Schaltung aufgrund des vom Differenzstrom an $\underline{Z1}$ erzeugten Spannungsabfalls und ist proportional zum Differenzstrom und der Rückkopplungsimpedanz $\underline{Z1}$. Die Ausgangswechselspannung des Strom-Spannungswandlers 10 ist somit ein Maß für die Materialbandlage in der Vorrichtung. Sie kann nun direkt weiter verwendet oder in einem Demodulator 15 zu einer proportionalen Gleichspannung umgewandelt werden.

Die Abschirmelektrode dient zur Verhinderung von Störeinflüssen der Umgebung, die schon durch in der Nähe befindliche Personen 1 oder unsymmetrisch angeordnete, leitfähige Maschinenteile gegeben sein können, aber auch durch Störfelder von anderen Einrichtungen der Gesamtanlage (Schweißmaschinen, elektrostatische Öler, thyristorgesteuerte Motoren usw.). Eine einfache Erdung der Abschirmelektrode 6 wäre deshalb nicht optimal, weil eine vollständige Erzwingung des Nullpotentials an der Detektorelektrode in der Praxis nicht möglich ist.

Da die Leerlaufverstärkung $v_o$ bei realen Verstärkerschaltungen nicht unendlich groß werden kann, wird auch die Eingangsspannung $U_e$ des Strom-Spannungswandlers 10 nicht vollständig zu Null. Aus diesem Grund tritt doch eine kleine Restspannung an der Detektorelektrode 3 auf. Um nun zu bewirken, daß die Kapazität zwischen den Elektroden 3 und 6 keinen Einfluß auf die Signalauswertung hat, ist es notwendig, daß kein Strom über diese Kapazität fließt. Dieses Ziel wird in an sich bekannter Weise dadurch erreicht, daß die Abschirmelektrode 6 zu jeder Zeit mit genau der gleichen Wechselspannung beaufschlagt wird, wie sie an der Detektorelektrode anliegt. Dies bewirkt der Spannungsfolger 11, dessen Operationsverstärker einen Verstärkungsfaktor von genau 1 aufweist und der das Potential der Abschirmelektrode 6 zwangsweise dem Potential der Detektorelektrode 3 nachführt.

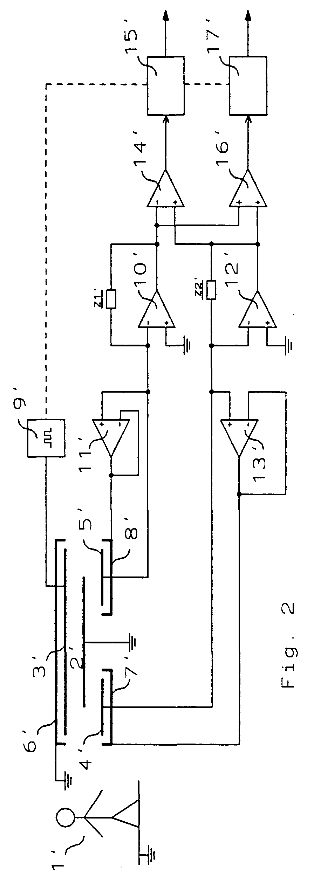

Bei der zweiten Ausbildung gemäß Fig. 2 ist die Breitenerfassungselektrode die Sendeelektrode 3', die vom Oszillator 9'gespeist wird und von der kapazitive Verschiebeströme zu den beiden Detektorelektroden 4', 5' fließen, welche hier die Randelektroden darstellen. Diese beiden Verschiebeströme werden nun - jeder für sich-einer Auswerteschaltung mit einem Strom-Spannungswandler 10' bzw. 12' zugeführt, wie sie oben für die erste Ausbildung beschrieben wurde. Auch hier werden die Wechselspannungen an den Detektorelektroden sehr klein gehalten, wodurch die Störkapazität zwischen Materialband und Detektorelektroden wirkungslos bleibt. Der Differenzverstärker 14' bildet die Differenz zwischen den Ausgangssignalen der Strom-Spannungswandler 10', 12' und das so gewonnene Signal wird dann wieder dem Demodulator 15' zugeführt.

Bei dieser Schaltungsvariante ist es nun auch möglich, zusätzlich zu dem Differenzsignal der Empfangselektroden, auch noch das Summensignal (Verstärker 16', Demodulator 17') zu bilden, um eine oftmals gewünschte Information über die Materialbandbreite zu erhalten.

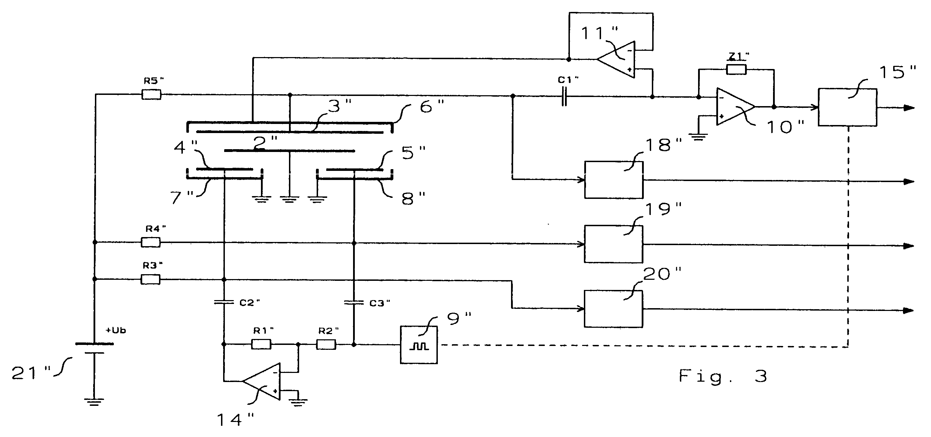

Fig. 3 zeigt eine weitere Ausbildung der ersten Variante, bei der die Isolation der aktiven Elektroden der Vorrichtung überwacht wird. Da die einzelnen Elektroden mittels Isolatoren am Vorrichtungsgestell befestigt sein müssen, können leitfähige Verunreinigungen auf der Oberfläche dieser Isolatoren auch zu Funktionsbeeinträchtigungen der Vorrichtung führen. Besonders beim Einbau von solchen Vorrichtungen in Trockenöfen oder Glühöfen erweist sich eine solche Isolationsüberwachung als besonders vorteilhaft, da der Zugang für das Wartungspersonal oft sehr schwierig und arbeitsaufwendig ist und Verschmutzungen der Isolatoren je nach Ofenatmosphäre durchaus vorkommen können.

Wie in Fig. 3 dargestellt, sind die drei Elektroden 3", 4" und 5" über Widerstände R3", R4" und R5" mit einer Gleichspannungsquelle 21" verbunden. Die Gleichspannung an den Elektroden kann nun von den Komparatoren 18", 19" und 20" überwacht werden. Bei richtiger Wahl der Ansprechschwellen der Komparatoren und der Widerstände R3", R4" und R5" erhält man an den Ausgängen der Komparatoren 18", 19" und 20" ein Alarmsignal, noch bevor die Verschmutzung der Isolatoren die Funktionsfähigkeit der Vorrichtung beeinträchtigt. Die Kondensatoren C1", C2" und C3" entkoppeln die Lagesignalauswertung von der Isolationsüberwachung.

## Patentansprüche

1. Vorrichtung zum berührungslosen Erfassen der Lage eines laufenden, aus leitfähigem Material bestehenden und auf Nullpotential liegenden Bandes (2)

   mit einer auf der einen Seite des Materialbandes parallel zu diesem angeordneten und den Bereich der Materialbandränder übergreifenden Breitenerfassungselektrode (3; 3'; 3") und einem Paar aus zwei Randelektroden (4,5; 4', 5'; 4", 5"), die auf der anderen Seite des Materialbandes im Bereich von dessen Rändern gegenüber der Breitenerfassungselektrode angeordnet sind,
   wobei eine der beiden Elektrodenanordnungen eine an einen Oszillator (9; 9'; 9") angeschlossene Sendeelektrodenanordnung (4, 5; 3'; 4", 5") und die andere eine kapazitiv derart an die Sendeelektrodenanordnung gekoppelte Detektorelektrodenanordnung (3; 4', 5'; 3") bildet, daß zwei Koppelstrekken im Bereich der beiden Ränder des Materialbandes gebildet sind und eine seitliche Versetzung des Bandes gegensinnig auf die beiden Kopplungen wirkt,
   und wobei an die Detektorelektrodenanordnung (3; 4', 5'; 3") eine Auswertesschaltung zur Gewinnung eines Lageabweichungssignals zur Regelung des Bandlaufs angeschlossen ist,

   dadurch gekennzeichnet, daß die Eingangsimpedanz der Auswerteschaltung so klein ist, daß das Potential der Detektorelektrodenanordnung (3; 4', 5'; 3") zwangsweise bei Null gehalten ist und das Meßsignal aus dem über die Auswerteschaltung abfließenden Strom gewonnen wird.

**2.** Vorrichtung nach Anspruch 1, dadurch gekennzeichnet, daß die Elektroden des Randlektrodenpaares Sendeelektroden (4, 5) sind, deren eine (5) unmittelbar und deren andere (4) nach einer Phasendrehung um 180° vom Oszillator (9) beaufschlagt sind, und daß die Detektorelektrode (3) die Breitenerfassungselektrode ist.

**3.** Vorrichtung nach Anspruch 1, dadurch gekennzeichnet, daß die Breitenerfassungselektrode eine Sendeelektrode (3') ist und jede der Randelektroden eine Detektorelektrode (4', 5'), die auf eine Auswerteschaltung wirkt.

**4.** Vorrichtung nach einem oder mehreren der vorhergehenden Ansprüche, dadurch gekennzeichnet, daß die Auswerteschaltung ein Strom-Spannungswandler (10; 10', 12'; 10") ist.

**5.** Vorrichtung nach Anspruch 4, dadurch gekennzeichnet, daß der Strom-Spannungswandler ein Operationsverstärker (101) ist und sein Eingang der invertierende Eingang des Operationsverstärkers ist, während dessen nicht invertierender Eingang an Nullpotential gelegt ist und sein Ausgang über einen Gegenkopplungswiderstand ($\underline{Z1}$; $\underline{Z1'}$, $\underline{Z2'}$; $\underline{Z1''}$) auf den invertierenden Eingang rückgekoppelt ist.

**6.** Vorrichtung nach einem oder mehreren der vorhergehenden Ansprüche, dadurch gekennzeichnet, daß die Detektorelektrode(n) von einer Abschirmelektrode (6; 7', 8'; 6") umfaßt ist und ein Spannungsfolger (11; 11', 13'; 11") ihr Potential zwangsweise dem Potential der Detektorelektrode(n) nachführt.

**7.** Vorrichtung nach einem oder mehreren der Ansprüche 3 bis 6, dadurch gekennzeichnet, daß die Ausgangssignale der Strom-Spannungswandler (10', 12') der Detektorelektroden (5', 4') in einem Differenzverstärker (14') zur Gewinnung eines Bandlagenabweichungssignals und in einem Additionsverstärker (16') zur Gewinnung eines Signals über die Bandbreite verarbeitet werden.

**8.** Vorrichtung nach einem oder mehreren der vorhergehenden Ansprüche, dadurch gekennzeichnet, daß alle Elektroden über Widerstände ($R_3$", $R_4$", $R_5$") an eine Gleichspannungsquelle (21") gelegt sind und ihr Potential zur Kontrolle der Isolierwirkung ihrer Aufhängung von Komparatoren (18", 19", 20") mit einstellbarer Ansprechschwelle überwacht wird.

**Claims**

**1.** Device for the non-contact detection of the position of a moving band (2), which is made from conductive material and is at zero potential, by means of a width-detection electrode (3; 3'; 3"), which is arranged on the one side of the material band parallel to the latter and overlaps the region of the edges of the material band, and a pair of two edge electrodes (4, 5; 4', 5'; 4", 5"), which are arranged on the other side of the material band in the region of its edges opposite the width-detection electrode, with one of the two electrode arrangements forming a transmitting electrode arrangement (4, 5; 3'; 4", 5"), which is connected to an oscillator (9; 9'; 9"), and the other one forming a detector electrode arrangement (3; 4', 5'; 3") which is capacitively coupled to the transmitting electrode arrangement in such a way that two coupling sections are formed in the region of the two edges of the material band and a lateral offset of the band acts on the two couplings in opposite directions, and with there being connected to the detector electrode arrangement (3; 4', 5'; 3") an evaluating circuit arrangement in order to obtain a position-deviation signal in order to control the movement of the band, characterised in that the input impedance of the evaluating circuit arrangement is so small that the potential of the detector electrode arrangement (3; 4', 5'; 3") is constrained at zero and the measurement signal is obtained from the current which flows off by way of the evaluating circuit arrangement.

**2.** Device according to claim 1, characterised in that the electrodes of the edge electrode pair are transmitting electrodes (4, 5), upon one (5) of which the oscillator (9) acts directly and upon the other (4) of which the oscillator (9) acts after a phase rotation about 180°, and in that the detector electrode (3) is the width-detection electrode.

**3.** Device according to claim 1, characterised in that the width-detection electrode is a transmitting electrode (3') and each of the edge electrodes is a detector electrode (4', 5') that acts upon an evaluating circuit arrangement.

**4.** Device according to one or more of the preceding claims, characterised in that the evaluating circuit arrangement is a current-to-voltage converter (10; 10', 12'; 10").

**5.** Device according to claim 4, characterised in that the current-to-voltage converter is an operational amplifier (101) and its input is the inverting input of the operational amplifier, whilst its non-inverting input is connected to zero potential and its output is coupled back to the inverting input by way of a reverse feedback resistor (Z1; Z1', Z2'; Z1").

6. Device according to one or more of the preceding claims, characterised in that the detector electrode (s) is (are) surrounded by a screening electrode (6; 7', 8'; 6"), and a voltage-follower (11; 11', 13'; 11") constrains its potential to track the potential of the detector electrode(s).

7. Device according to one or more of claims 3 to 6, characterised in that the output signals of the current-to-voltage converters (10', 12') of the detector electrodes (5', 4') are processed in a differential amplifier (14') in order to obtain a bandposition deviation signal and in an adding amplifier (16') in order to obtain a signal relating to the width of the band.

8. Device according to one or more of the preceding claims, characterised in that all the electrodes are connected to a direct-voltage source (21") by way of resistors ($R_3$", $R_4$", $R_5$"), and in order to check the insulating effect of their suspension their potential is monitored by comparators (18", 19", 20") having an adjustable response threshold.

**Revendications**

1. Dispositif pour la détection sans contact de la position d'une bande (2) de matériau conducteur en mouvement, connectée au potentiel zéro, comprenant une électrode de détection de largeur (3, 3', 3") qui est disposée sur une face de la bande de matériau, parallèlement à celle-ci, et enjambe la région des bords de la bande de matériau et une paire de deux électrodes de détection de bord (4, 5; 4', 5'; 4", 5") qui sont disposées sur l'autre face de la bande de matériau, dans la région des bords de celle-ci, en vis-à-vis de l'électrode de détection de largeur, l'un des deux systèmes d'électrodes formant un système d'électrodes émetteur (4,5; 3'; 4", 5") connectées à un oscillateur (9; 9'; 9") et l'autre système d'électrodes formant un système d'électrodes détecteur (3; 4', 5'; 3") couplé capacitivement au système d'électrodes émettreur de manière à former deux trajets de couplage dans la région des deux bords de la bande matériau et qu'un décalage latéral de la bande agisse dans des sens opposés sur les deux couplages, un circuit de traitement pour la formation d'un signal d'écart de position pour la régulation du défilement de la bande étant connecté au système d'électrodes émetteur (3; 4', 5'; 3"), caractérisé en ce que l'impédance d'entrée du circuit de traitement est suffisamment faible pour que le potentiel du système d'électrodes détecteur (3; 4', 5'; 3") soit automatiquement maintenu à zéro et en ce que le signal de mesure est obtenu à partir du courant sortant du circuit de traitement.

2. Dispositif selon la revendication 1, caractérisé en ce que les électrodes de la paire d'électrodes de détection de bord sont des électrodes émettrices (4, 5) parmi lesquelles l'une (5) est alimentée directement par l'oscillateur (9)à et l'autre est alimentée par l'oscillateur après une rotation de phase de 180° et en ce que l'électrode détectrice (3) est l'électrode de détection de largeur .

3. Dispositif selon la revendication 1, caractérisé en ce que l'électrode de détection de largeur (3') est une électrode émettrice (3') et en ce que chacune des électrodes de détection de bord est une électrode détectrice (4', 5') qui agit sur un circuit de traitement.

4. Dispositif selon une ou plusieurs des revendications précédentes, caractérisé en ce que le circuit de traitement est un convertisseur de courant-tension (10; 10', 12';10").

5. Dispositif selon la revendication 4, caractérisé en ce que le convertisseur de courant-tension est un amplificateur opérationnel (101) et en ce que son entrée est l'entrée inverseuse de l'amplificateur opérationnel, tandis que son entrée non-inverseuse est connectée au potentiel zéro et sa sortie est connectée à l'entrée inverseuse par l'intermédiaire d'une résistance de contre-réaction (Z1; Z1', Z2'; Z1").

6. Dispositif selon une ou plusieurs des revendications précédentes, caractérisé en ce que l'électrode (les électrodes) détectrice(s) est (sont) entourées par une électrode de blindage (6; 7'; 8'; 6") et qu'un étage suiveur en tension (11; 11', 13'; 11") ajuste automatiquement son potentiel sur le potentiel de l'électrode (des électrodes) détectrice(s).

7. Dispositif selon une ou plusieurs des revendications 3 à 6, caractérisé en ce que les signaux de sortie du convertisseur de courant-tension (10', 12') des électrodes détectrices (5', 4') sont traités dans un amplificateur différentiel pour former un signal d'écart de position de bande et dans un amplificateur additionneur (16') pour former un signal de largeur de bande.

8. Dispositif selon une ou plusieurs des revendications précédentes, caractérisé en ce que toutes les électrodes sont connectées à une source de tension continue (21") par l'intermédiaire de résistances ($R_3$", $R_4$", $R_5$") et en ce que leur potentiel, pour le contrôle de l'efficacité de l'isolation de leur montage est surveillé par des comparateurs (18", 19", 20") à seuil de déclenchement ajustable.

Fig. 1

Fig. 2

Fig. 3

EP 0 734 986 B1